# EUROPÄISCHE PATENTSCHRIFT

(11) **EP 2 861 492 B1**
(45) Veröffentlichungstag und Bekanntmachung des Hinweises auf die Patenterteilung: **04.05.2016**
(21) Anmeldenummer: 13728676.1
(22) Anmeldetag: 29.05.2013
(51) Int. Cl.: B64D 11/00, G01S 13/74

(54) **VERFAHREN UND PASSAGIERINFORMATIONSSYSTEM ZUR BEREITSTELLUNG VON FLUGINFORMATIONSDATEN**
METHOD AND PASSENGER INFORMATION SYSTEM FOR PROVIDING FLIGHT INFORMATION DATA
PROCÉDÉ ET SYSTÈME D'INFORMATION SERVANT À FOURNIR DES INFORMATIONS DE VOL À DES PASSAGERS

(30) Priorität: 15.06.2012 DE 102012210149
(43) Veröffentlichungstag der Anmeldung: 22.04.2015
(73) Patentinhaber: Lufthansa Technik AG, 22335 Hamburg (DE)
(72) Erfinder: WENDE, Gerko, 20251 Hamburg (DE)
(74) Vertreter: Müller Verweyen
(86) Internationale Anmeldenummer: PCT/EP2013/001587
(87) Internationale Veröffentlichungsnummer: WO 2013/185886

(56) Entgegenhaltungen:
- US-A- 3 660 847
- US-A- 4 975 696
- US-A1- 2009 282 469

## Beschreibung

Die Erfindung betrifft ein Verfahren zur Bereitstellung von Fluginformationsdaten für einen Passagier in einem Flugzeug mit den Merkmalen des Oberbegriffs von Anspruch 1 und ein entsprechendes Passagierinformationssystem zur Bereitstellung von Fluginformationsdaten mit den Merkmalen des Oberbegriffs von Anspruch 9.

In Flugzeugen ist es üblich, den Passagieren über Passagierinformationssysteme, wie beispielsweise Bordinformations- bzw. Bordunterhaltungssysteme, Fluginformationen bereitzustellen. Auf einem Bildschirm werden beispielsweise die Flughöhe, Flugzeugposition, Geschwindigkeit, Reiseziel, usw. angezeigt, so dass der Passagier genaue Informationen darüber hat, wo sich das Flugzeug gerade befindet und wie lange es beispielsweise noch bis zum Reiseziel ist.

US4975696A beschreibt ein solches Passagierinformationssystem zur Bereitstellung von Fluginformationsdaten.

Diese Fluginformationsdaten werden mittels kabelgebundener Schnittstellen von den Cockpitsystemen an die Kabinensysteme, zu denen auch die Passagierinformationssysteme zählen, übermittelt. Zu diesem Zweck sind Standardschnittstellen, wie z.B. der Datenbusstandard ARINC-429, definiert. Alternativ können zu diesem Zweck auch Netzwerkverbindungen, wie beispielsweise Ethernetverbindungen, genutzt werden.

In jedem Fall sind die Schnittstellen und die Verfahren zur Bereitstellung von Fluginformationsdaten so zu gestalten und auszulegen, dass eine unbeabsichtigte Beeinflussung der Cockpitsysteme durch die Kabinensysteme technisch ausgeschlossen ist. Nur mit entsprechendem Nachweis ist die Nutzung einer solchen Datenverbindung bzw. eines entsprechend angeschlossenen Passagierinformationssystems luftrechtlich zulässig.

Diese spezielle vorgeschriebene Auslegung und Nachweisführung ist bei der Entwicklung, Produktion und Installation von Kabinensystemen mit einem erheblichen technischen und administrativen Aufwand verbunden.

Der Erfindung liegt somit die Aufgabe zugrunde, ein Verfahren und ein entsprechendes Passagierinformationssystem zur Bereitstellung von Fluginformationsdaten zu schaffen, bei dem die beschriebenen Probleme reduziert sind.

Die Erfindung löst diese Aufgabe mit den Merkmalen der unabhängigen Ansprüche. Somit wird zur Lösung der Aufgabe ein Verfahren zur Bereitstellung von Fluginformationsdaten für einen Passagier in einem Flugzeug vorgeschlagen, wobei die Fluginformationsdaten von einem Cockpitsystem des Flugzeugs zu mindestens einem Passagierinformationssystem in demselben Flugzeug übermittelt werden, und wobei die Fluginformationsdaten als Sekundärradarsignal und/oder Überwachungssignal ausgesendet und von dem mindestens einen Passagierinformationssystem empfangen werden.

Erfindungsgemäß wird zur Lösung der Aufgabe auch ein entsprechendes Passagierinformationssystem zur Bereitstellung von Fluginformationsdaten für einen Passagier in einem Flugzeug vorgeschlagen, wobei das Passagierinformationssystem ein Empfangsmodul umfasst, welches dazu eingerichtet ist, ein vom Flugzeug ausgestrahltes Sekundärradarsignal und/oder ein vom Flugzeug ausgestrahltes Überwachungssignal zu empfangen, und welches dazu eingerichtet ist, die darin enthaltenen Fluginformationsdaten zu verarbeiten und auszugeben. Zusätzlich können die Fluginformationsdaten dabei auch dekodiert werden.

Bei dem Überwachungssignal handelt es sich vorzugsweise um ein automatisches, kontinuierlich ausgesendetes Signal, welches beispielsweise ein System der Flugsicherung zur Anzeige der Flugbewegungen im Luftraum sein kann. Mit einem solchen Überwachungssignal sendet das Flugzeug kontinuierlich Fluginformationen aus, die von Bodenstationen empfangen und ausgewertet werden können.

Flugzeuge senden zudem gewisse Fluginformationen als Sekundärradarsignal aus. Das Sekundärradar unterscheidet sich von einem Primärradar dadurch, dass am Ziel keine passive Reflexion stattfindet, sondern durch das Sekundärradarsignal eine Anfrage mit einem Antwortsignal beantwortet wird. Flugzeuge antworten somit beispielsweise auf eine vom Boden ausgesendete Anfrage mit relevanten Fluginformationen, wie Flugnummer oder Flughöhe, durch einen im Flugzeug vorhandenen Transponder. Die zu überwachenden Flugzeuge antworten aktiv auf ein empfangenes Radarsignal mit dem Aussenden einer Antwort auf der gleichen oder einer anderen Frequenz. Bei dem in der Zivilluftfahrt verwendeten System wird die Abfrage in der Regel auf der Frequenz 1030 MHz und die Antwort auf der Frequenz 1090 MHz übertragen.

Das Sekundärradar- und/oder Überwachungssignal wird im eigenen Flugzeug ohne Umwege durch das Passagierinformationssystem empfangen und ausgewertet. Es wird somit keine extra kabelgebundene Datenverbindung zwischen Cockpitsystem und Passagierinformationssystem vorgesehen, sondern die Fluginformationsdaten werden über das standardmäßig ausgesendete Überwachungssignal und/oder das Sekundärradarsignal per Funk vom Cockpitsystem auf das Passagierinformationssystem im eigenen Flugzeug übertragen und können dort ausgewertet werden. Die Fluginformationsdaten werden als Sekundärradarsignal und/oder Überwachungssignal ausgesendet und von dem mindestens einen Passagierinformationssystem auch als Sekundärradarsignal und/oder Überwachungssignal empfangen.

Durch diese Nutzung der vom Flugzeug ohnehin ausgesendeten Signale, deren eigentlicher Zweck nicht der Empfang im eigenen ausstrahlenden Flugzeug ist, kann die üblicherweise vorgesehene Kabelverbindung entfallen. Dadurch wird das Flugzeug insgesamt leichter und der Installationsaufwand ist gering.

Durch die Nutzung des Sekundärradar- und/oder Überwachungssignals im eigenen Flugzeug kann zudem die Installation und die luftfahrtrechtliche Zulassung des Passagierinformationssystems erheblich vereinfacht werden. Denn der für die luftfahrtrechtliche Zulassung benötigte Nachweis, dass die Cockpitsysteme nicht beeinflusst werden, kann sehr einfach erbracht werden. Die Cockpitsysteme, wie beispielsweise die Fluginstrumente der Avionik, dürfen durch das Passagierinformationssystem bzw. der Informationsübermittlung an das Passagierinformationssystem nicht negativ beeinträchtigt werden.

Wenn eine neue Datenverbindung von einem Cockpitsystem zur Kabine vorgesehen wird, muss dieser Nachweis aufwendig erbracht werden. Hingegen wird bei dem erfindungsgemäßen Verfahren bzw. beim erfindungsgemäßen Passagierinformationssystem ein ohnehin ausgesendetes Signal genutzt und ein in der Kabine vorgesehener passiver Empfänger stört die Cockpitsysteme nicht.

Bei dem erfindungsgemäßen Verfahren bzw. dem erfindungsgemäßen Passagierinformationssystem ist eine Reihe von Aspekten vorteilhaft, die im Folgenden erläutert werden.

Vorzugsweise werden die Fluginformationsdaten gemäß des "Mode Selektive" Standards, auch Mode S genannt, vom Cockpitsystem zum mindestens einen Passagierinformationssystem übermittelt.

Bei dem Mode S Standard handelt es sich um einen durch die Internationale Zivilluftfahrtorganisation (ICAO) definierten Standard. Beim Mode S weist jedes Flugzeug einen Transponder mit einer fest einprogrammierten individuellen Adresse auf. Auf diese Weise werden bei einer Abfrage nur durch ihre Adresse vorbestimmte Transponder angesprochen, so dass nicht zu viele ungewünschte Antwortsignale erzeugt werden.

Zudem ist der Mode S für die Erfindung vorteilhaft, da über ihn vergleichsweise viele Fluginformationsdaten vom Cockpitsystem zum Passagierinformationssystem übermittelbar sind.

Vorzugsweise wird als Überwachungssignal das vom Flugzeug kontinuierlich ausgestrahlte ADS-B Signal genutzt. Bei dem ADS-B Signal handelt es sich um das sogenannte "Automatic Dependent Surveillance" Signal, auch ADS-Broadcast bzw. kurz ADS-B genannt.

Flugzeuge senden beim ADS-B Verfahren selbständig, beispielsweise einmal pro Sekunde, ein ungerichtetes Signal, welches Fluginformationsdaten, wie beispielsweise Flugnummer, Flugzeugtyp, Geschwindigkeit, Flughöhe und geplante Flugrichtung, enthält. Diese Fluginformationsdaten werden über das vom Flugzeug kontinuierlich ausgestrahlte ADS-B Signal vom Cockpitsystem zum mindestens einen Passagierinformationssystem übermittelt und von dem Passagierinformationssystem anschließend empfangen, dekodiert, verarbeitet und für den Passagier ausgegeben.

Zum Empfang der vom Flugzeug ausgesendeten Fluginformationsdaten weist das Empfangsmodul des Passagierinformationssystems entsprechend vorzugsweise einen "Mode Selektive" Empfänger und/oder einen ADS-B Empfänger auf. Beide Empfänger sind dabei vorzugsweise in einem Empfangsmodul realisiert.

In einer bevorzugten Ausführungsform der Erfindung werden zur Verarbeitung weitere Fluginformationsdaten aus dem mindestens einen Passagierinformationssystem und/oder einer zusätzlichen Datenverbindung genutzt.

Die weiteren Fluginformationsdaten können beispielsweise in Datenbanken des Fluginformationssystems hinterlegt sein oder durch eine Internetverbindung abgerufen werden. Auf diese Weise können dem Passagier auch solche Fluginformationsdaten angezeigt werden, die durch das Sekundärradar- und/oder Überwachungssignal standardmäßig nicht übermittelt werden.

Es ist beispielsweise bevorzugt, den Abflugs- und/oder Ankunftsort des Flugzeugs von dem mindestens einen Passagierinformationssystem anhand der über das Sekundärradarsignal und/oder des Überwachungssignals empfangenen Flugnummer des Flugzeugs zu ermitteln. Dies kann durch Abgleich der Flugnummer mit einem Eintrag in einer Datenbank des Fluginformationssystems geschehen oder beispielsweise über eine Internetverbindung abgerufen werden. Das Passagierinformationssystem ist somit vorzugsweise dazu eingerichtet, zur Verarbeitung der empfangenen Fluginformationsdaten Zusatzdaten aus einer Datenbank des Passagierinformationssystems und/oder aus einer zusätzlichen Datenverbindung zu nutzen.

In einer Ausführungsform der Erfindung ist es bevorzugt, dass das mindestens eine Passagierinformationssystem Signale von einem vom Boden ausgesendeten Verkehrsinformationsdienst auswertet und mitverarbeitet. Ein dafür bevorzugtes System ist der "Traffic Information Service" (TIS), über den beispielsweise Wetterdaten, Informationen über sich annähernde Flugzeuge und Flugfreigaben an das Flugzeug übermittelt werden. Diese Informationen können durch das Passagierinformationssystem auch mitgelesen und ausgewertet werden, um dem Passagier noch umfangreichere Fluginformationen darzustellen.

In einer weiteren bevorzugten Ausführungsform der Erfindung empfängt das mindestens eine Passagierinformationssystem die Fluginformationsdaten aus einem Sekundärradarsignal und/oder einem ADS-B Signal eines weiteren Flugzeugs, verarbeitet diese Fluginformationsdaten und gibt sie dem Passagier aus. Genauso wie das Flugzeug, in dem sich das erfindungsgemäße Passagierinformationssystem befindet, senden auch andere Flugzeuge über Sekundärradar und/oder ADS-B ihre Fluginformationen aus.

Wenn sich diese weiteren Flugzeuge in dem Umfeld des Passagierinformationssystems befinden, kann dieses auch diese Daten auswerten. Weiterhin ist es möglich, dass das Passagierinformationssystem diese Daten über eine zusätzliche Datenverbindung ergänzt bzw. vollständig abruft.

Dem Passagier kann auf diese Weise auf einem Bildschirm genau angezeigt werden wohin ein Flugzeug fliegt, welches er beispielsweise aus dem Fenster gerade beobachten kann. Die Fluginformationsdaten weiterer Flugzeuge können dabei prinzipiell genauso wie die Daten des eigenen Flugzeugs ausgewertet und bevorzugt auf einer Kartendarstellung in der Kabine angezeigt werden.

Die Erfindung wird im Folgenden anhand bevorzugter Ausführungsformen unter Bezugnahme auf die beigefügten Figuren erläutert. Dabei zeigt:
- Fig. 1: eine Seitensicht eines Flugzeugs mit mehreren Passagierinformationssystemen; und
- Fig. 2: eine schematische Ansicht eines erfindungsgemäßen Passagierinformationssystems.

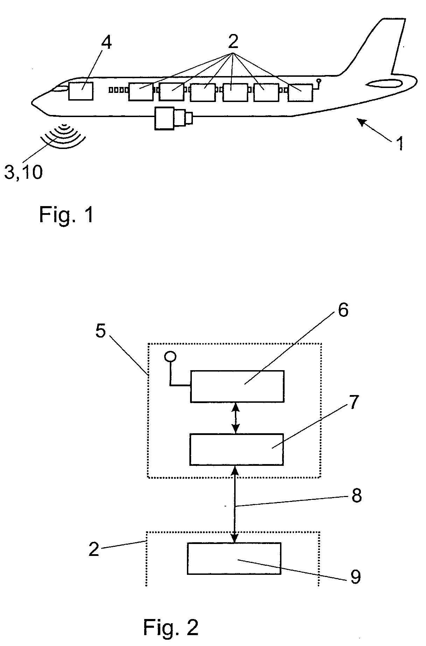

In der Fig. 1 ist ein Flugzeug 1 dargestellt, welches sowohl ein Sekundärradarsignal 3 als auch ein Überwachungssignal 10 aussendet.

Das Sekundärradarsignal 3 ist ein im Mode Selektive (Mode S) erzeugtes Signal, bei dem Überwachungssignal 10 handelt es sich um ein im ADS-B Verfahren kontinuierlich (in regelmäßigen Abständen) ausgestrahltes Signal.

Das Sekundärradarsignal 3 und das Überwachungssignal 10 enthalten Fluginformationsdaten, wie beispielsweise die Flugzeugkennung (tail sign), die Flugnummer, die Flugzeugposition, Flughöhe, Kurs, Steig- bzw. Senkraten, Neigung und/oder Geschwindigkeit des Flugzeugs. Diese Fluginformationsdaten werden vom Flugzeug 1 gemäß entsprechender Vorgaben in bestimmten Abständen ausgestrahlt bzw. als Antwortsignal gesendet.

Für die Passagiere des Flugzeugs 1 sind mehrere Passagierinformationssysteme 2 im Flugzeug 1 vorgesehen. Diese Passagierinformationssysteme 2 können beispielsweise Bordunterhaltungs- und/oder Bordinformationssysteme sein, durch die den Passagieren Fluginformationsdaten bereitgestellt werden.

Erfindungsgemäß werden diese Fluginformationsdaten von einem Cockpitsystem 4 durch das Sekundärradar- und/oder Überwachungssignal 3, 10 an mindestens ein Passagierinformationssystem 2 übermittelt. Dabei wird nicht extra für das Passagierinformationssystem 2 ein Signal erzeugt, sondern das Passagierinformationssystem 2 empfängt solche Sekundärradar- und/oder Überwachungssignale 3, 10, die ohnehin vom Flugzeug 1 ausgesendet werden. Das Cockpitsystem 4 kann beispielsweise ein Fluginstrument der Flugzeugavionik sein.

Dazu weist mindestens ein Passagierinformationssystem 2 ein Empfangsmodul 5 auf, welches in der Fig. 2 näher dargestellt ist.

Die Fig. 2 zeigt ein Passagierinformationssystem 2, welches über eine Datenverbindung 8 mit dem Empfangsmodul 5 in Verbindung steht. Es kann sich dabei beispielsweise um ein Empfangsmodul 5 handeln, welches einen "Mode Selektive" Empfänger und/oder ADS-B Empfänger umfasst. Der ADS-B Empfänger ist demnach bevorzugt zusammen mit dem "Mode Selektive" Empfänger in einem Empfangsmodul 5 verwirklicht.

Das Empfangsmodul 5 weist ein Hochfrequenzmodul 6 und eine Datenvorverarbeitungseinheit 7 auf. Nachdem das Sekundärradarsignal 3 und/oder das Überwachungssignal 10 von dem Hochfrequenzmodul 6 empfangen worden ist, wird es in der Datenvorverarbeitungseinheit dekodiert und vorverarbeitet. Anschließend wird es über die Datenverbindung 8, die vorzugsweise als USB-Datenverbindung ausgeführt ist, auf eine Verarbeitungseinheit 9 im Passagierinformationssystem übertragen.

Die im Sekundärradar- bzw. Überwachungssignal 3, 10 enthaltenen Fluginformationsdaten werden durch die Datenverarbeitungseinheit 9 ausgewertet und vorzugweise durch weitere Fluginformationsdaten ergänzt. Diese weiteren Fluginformationsdaten können beispielsweise aus einer Internetverbindung abgerufen werden. Es ist auch möglich und bevorzugt, sie aus einer in dem Passagierinformationssystem 2 vorgesehenen Datenbank abzurufen.

Auf diese Weise kann beispielsweise das Reiseziel anhand der Flugnummer ermittelt werden. Zur Darstellung für den Passagier ist vorzugsweise eine Ausgabeeinrichtung, beispielsweise ein Bildschirm, vorgesehen, auf dem die Fluginformationsdaten dargestellt werden. Vorzugsweise wird eine Kartendarstellung erzeugt, auf der das eigene Flugzeug 1 und umgebene Flugzeuge 1 dargestellt werden, deren Fluginformationsdaten beispielsweise über den ADS-B Empfänger empfangen werden können.

### Bezugszeichenliste:

- 1: Flugzeug
- 2: Passagierinformationssystem
- 3: Sekundärradarsignal
- 4: Cockpitsystem
- 5: Empfangsmodul
- 6: Hochfrequenzmodul
- 7: Datenvorverarbeitungseinheit
- 8: Datenverbindung
- 9: Verarbeitungseinheit
- 10: Überwachungssignal

## Patentansprüche

1. Verfahren zur Bereitstellung von Fluginformationsdaten für einen Passagier in einem Flugzeug (1), wobei die Fluginformationsdaten von einem Cockpitsystem (4) des Flugzeugs (1) zu mindestens einem Passagierinformationssystem (2) in demselben Flugzeug (1) übermittelt werden, **dadurch gekennzeichnet, dass** die Fluginformationsdaten als Sekundärradarsignal (3) und/oder Überwachungssignal (10) ausgesendet und von dem mindestens einen Passagierinformationssystem (2) empfangen werden, wobei es sich bei dem Sekundärradarsignal (3) und/oder Überwachungssignal (10) um ein vom Flugzeug ohnehin ausgesendetes Signal handelt, dessen eigentlicher Zweck nicht der Empfang im eigenen ausstrahlenden Flugzeug ist, und wobei es sich bei dem Überwachungssignal (10) um ein automatisches, kontinuierlich ausgesendetes Signal, welches Teil eines Systems einer Flugsicherung zur Anzeige der Flugbewegungen im Luftraum ist, handelt.

2. Verfahren nach Anspruch 1, **dadurch gekennzeichnet, dass** die Fluginformationsdaten gemäß des "Mode Selektive" Standards vom Cockpitsystem (4) zum mindestens einen Passagierinformationssystem (2) übermittelt werden.

3. Verfahren nach Anspruch 1 oder 2, **dadurch gekennzeichnet, dass** als Überwachungssignal (10) das vom Flugzeug (1) kontinuierlich ausgestrahlte ADS-B Signal genutzt wird.

4. Verfahren nach einem der vorangegangenen Ansprüche, **dadurch gekennzeichnet, dass** die an das mindestens eine Passagierinformationssystem (2) übermittelten Fluginformationsdaten von dem mindestens einen Passagierinformationssystem (2) dekodiert, verarbeitet und ausgegeben werden.

5. Verfahren nach Anspruch 4, **dadurch gekennzeichnet, dass** zur Verarbeitung weitere Fluginformationsdaten aus dem mindestens einen Passagierinformationssystem (2) und/oder einer zusätzlichen Datenverbindung genutzt werden.

6. Verfahren nach Anspruch 5, **dadurch gekennzeichnet, dass** der Abflugs- und Ankunftsort des Flugzeugs (1) von dem mindestens einen Passagierinformationssystem (2) anhand der über das Sekundärradarsignal (3) und/oder des Überwachungssignals (10) empfangenen Flugnummer des Flugzeugs (1) ermittelt wird.

7. Verfahren nach einem der Ansprüche 4 bis 6, **dadurch gekennzeichnet, dass** das mindestens eine Passagierinformationssystem (2) Signale von einem vom Boden ausgesendeten Verkehrsinformationsdienst auswertet und mitverarbeitet.

8. Verfahren nach einem der Ansprüche 4 bis 7, **dadurch gekennzeichnet, dass** das mindestens eine Passagierinformationssystem (2) die Fluginformationsdaten aus einem Sekundärradarsignal (3) und/oder einem ADS-B Signal eines weiteren Flugzeugs (1) empfängt, verarbeitet und ausgibt.

9. Passagierinformationssystem (2) zur Bereitstellung von Fluginformationsdaten für einen Passagier in einem Flugzeug (1), **dadurch gekennzeichnet, dass** das Passagierinformationssystem ein Empfangsmodul (5) umfasst, welches dazu eingerichtet ist, ein vom Flugzeug (1) ausgestrahltes Sekundärradarsignal (3) und/oder ein vom Flugzeug (1) ausgestrahltes Überwachungssignal (10) zu empfangen und die darin enthaltenen Fluginformationsdaten zu verarbeiten und auszugeben, wobei es sich bei dem Sekundärradarsignal (3) und/oder Überwachungssignal (10) um ein vom Flugzeug ohnehin ausgesendetes Signal handelt, dessen eigentlicher Zweck nicht der Empfang im eigenen ausstrahlenden Flugzeug ist, und wobei es sich bei dem Überwachungssignal (10) um ein automatisches, kontinuierlich ausgesendetes Signal, welches Teil eines Systems einer Flugsicherung zur Anzeige der Flugbewegungen im Luftraum ist, handelt.

10. Passagierinformationssystem (2) nach Anspruch 9, **dadurch gekennzeichnet, dass** das Empfangsmodul (5) einen "Mode Selektive" Empfänger und/oder einen ADS-B Empfänger aufweist.

11. Passagierinformationssystem (2) nach Anspruch 9 oder 10, **dadurch gekennzeichnet, dass** es dazu eingerichtet ist, zur Verarbeitung der empfangenen Fluginformationsdaten Zusatzdaten aus einer Datenbank des Passagierinformationssystems (2) und/oder aus einer zusätzlichen Datenverbindung zu nutzen.

## Claims

1. Method for providing flight information data for a passenger in an aircraft (1), wherein the flight information data is transmitted from a cockpit system (4) of the aircraft (1) to at least one passenger information system (2) in the same aircraft (1), **characterized in that** the flight information data is transmitted as a secondary radar signal (3) and/or monitoring signal (10) and received by the at least one passenger information system (2), wherein the secondary radar signal (3) and/or monitoring signal (10) is a signal which is transmitted from the aircraft anyway, and the actual purpose of which is not reception in the host transmitting aircraft, and wherein the monitoring signal (10) is a continuously transmitted automatic signal which is part of an air traffic control system for displaying the aircraft movements in the airspace.

2. Method according to claim 1, **characterized in that** the flight information data is transmitted according to the "Mode-Selective" standard from the cockpit system (4) to the at least one passenger information system (2).

3. Method according to claim 1 or 2, **characterized in that** the ADS-B signal, which is continuously emitted by the aircraft (1), is used as the monitoring signal (10).

4. Method according to any one of the preceding claims, **characterized in that** the flight information data transmitted to the at least one passenger information system (2) is decoded, processed and output by the at least one passenger information system (2).

5. Method according to claim 4, **characterized in that** further flight information data from the at least one passenger information system (2) and/or an additional data connection is used for the processing.

6. Method according to claim 5, **characterized in that** the places of departure and arrival of the aircraft (1) are determined by the at least one passenger information system (2) based on the flight number of the aircraft (1) received via the secondary radar signal (3) and/or the monitoring signal (10).

7. Method according to one of claims 4 to 6, **characterized in that** the at least one passenger information system (2) evaluates and co-processes signals transmitted from the ground by a traffic information service.

8. Method according to one of claims 4 to 7, **characterized in that** the at least one passenger information system (2) receives, processes and outputs the flight information data from a secondary radar signal (3) and/or an ADS-B signal of a further aircraft (1).

9. Passenger information system (2) for providing flight information data for a passenger in an aircraft (1), **characterized in that** the passenger information system comprises a receiver module (5) which is configured for receiving a secondary radar signal (3) emitted by the aircraft (1) and/or for receiving a monitoring signal (10) emitted by the aircraft (1), and for processing and outputting the flight information data contained therein, wherein the secondary radar signal (3) and/or monitoring signal (10) is a signal which is transmitted from the aircraft anyway, and the actual purpose of which is not reception in the host transmitting aircraft, and wherein the monitoring signal (10) is a continuously transmitted automatic signal which is part of an air traffic control system for displaying the aircraft movements in the airspace.

10. Passenger information system (2) according to claim 9, **characterized in that** the receiver module (5) has a "Mode-Selective" receiver and/or an ADS-B receiver.

11. Passenger information system (2) according to claim 9 or 10, **characterized in that** for processing the received flight information data, the passenger information system is configured for using additional data from a database of the passenger information system (2) and/or from an additional data connection.

## Revendications

1. Procédé servant à fournir à un passager dans un avion (1) des données d'informations de vol, dans lequel les données d'informations de vol sont transmises depuis un système de cockpit (4) de l'avion (1) à au moins un système d'information des passagers (2) dans le même avion (1), **caractérisé en ce que** les données d'informations de vol sont émises sous la forme d'un signal radar secondaire (3) et/ou d'un signal de surveillance (10) et reçues par ledit au moins un système d'information des passagers (2), dans lequel il s'agit, dans le cas du signal radar secondaire (3) et/ou du signal de surveillance (10), d'un signal émis de toute façon par l'avion, dont l'objet principal n'est pas la réception dans le propre avion émettant, et dans lequel il s'agit, concernant le signal de surveillance (10), d'un signal automatique émis en continu, qui fait partie d'un système de contrôle de la circulation aérienne pour visualiser les mouvements de vols dans l'espace aérien.

2. Procédé selon la revendication 1, **caractérisé en ce que** les données d'informations de vol sont transmises conformément à la norme « Mode Sélectif » depuis un système de cockpit (4) audit au moins un système d'information des passagers (2).

3. Procédé selon la revendication 1 ou 2, **caractérisé en ce que** le signal ADS-B émis en continu par l'avion (1) est utilisé comme signal de surveillance (10).

4. Procédé selon l'une des revendications précédentes, **caractérisé en ce que** les données d'informations de vol transmises audit au moins un système d'information des passagers (2) sont décodées, traitées et émises par ledit au moins un système d'information des passagers (2).

5. Procédé selon la revendication 4, **caractérisé en ce que** d'autres données d'informations de vol provenant dudit au moins un système d'information des passagers (2) et/ou d'un liaison de données supplémentaire sont utilisées pour être traitées.

6. Procédé selon la revendication 5, **caractérisé en ce que** le type de départ et d'arrivé de l'avion (1) est détecté par ledit au moins un système d'information des passagers (2) par le biais du numéro de vol de l'avion (1) reçu par l'intermédiaire du signal radar secondaire (3) et/ou du signal de surveillance (10).

7. Procédé selon l'une des revendications 4 à 6, **caractérisé en ce que** ledit au moins un système d'information des passagers (2) analyse et traite en même temps des signaux d'un service d'information sur le trafic émis depuis le sol.

8. Procédé selon l'une des revendications 4 à 7, **caractérisé en ce que** ledit au moins un système d'information des passagers (2) reçoit, traite et émet les données d'informations de vol provenant d'un signal radar secondaire (3) et/ou d'un signal ADS-B d'un autre avion (1).

9. Système d'information des passagers (2) servant à fournir à un passager dans un avion (1) des données d'informations de vol, **caractérisé en ce que** le système d'information des passagers comprend un module de réception (5) qui est agencé pour recevoir un signal radar secondaire (3) émis par l'avion (1) et/ou un signal de surveillance (10) émis par l'avion (1) et pour traiter et émettre les données d'informations de vol y contenues, dans lequel il s'agit, dans le cas du signal radar secondaire (3) et/ou du signal de surveillance (10), d'un signal émis de toute façon par l'avion, dont l'objet principal n'est pas la réception dans le propre avion émettant, et dans lequel il s'agit, concernant le signal de surveillance (10), d'un signal automatique émis en continu, qui fait partie d'un système de contrôle de la circulation aérienne pour visualiser les mouvements de vols dans l'espace aérien.

10. Système d'information des passagers (2) selon la revendication 9, **caractérisé en ce que** le module de réception (5) présente un récepteur « Mode Sélectif » et/ou un récepteur ADS-B.

11. Système d'information des passagers (2) selon la revendication 9 ou 10, **caractérisé en ce qu'**il est agencé pour utiliser, pour le traitement des données d'informations de vol reçues, des données supplémentaires provenant d'une base de données du système d'information des passagers (2) et/ou d'une liaison de données supplémentaire.
